# EUROPEAN PATENT APPLICATION

(11) **EP 4 491 917 A1**
(43) Date of publication of application: **15.01.2025**
(21) Application number: 23766028.7
(22) Date of filing: 08.03.2023
(51) Int. Cl.: F16K 5/04, F16K 11/085

(54) **CONTROL VALVE**

(30) Priority: 08.03.2022 CN 202210219030; 08.03.2022 CN 202210219282
(71) Applicant: Zhejiang Sanhua Automotive Components Co., Ltd., Hangzhou, Zhejiang 310018 (CN)
(72) Inventor: ZHU, Jinghui, Hangzhou Economic & Technological Development Area Hangzhou, Zhejiang 310018 (CN); WU, Donglin, Hangzhou Economic & Technological Development Area Hangzhou, Zhejiang 310018 (CN); ZHOU, Chong, Hangzhou Economic & Technological Development Area Hangzhou, Zhejiang 310018 (CN)
(74) Representative: Maikowski & Ninnemann Patentanwälte Partnerschaft mbB
(86) International application number: PCT/CN2023/080206
(87) International publication number: WO 2023/169450

(57) **Abstract**

Disclosed in the present application is a control valve, which is provided with an accommodating cavity. The control valve comprises a valve body and a valve core, wherein the valve body comprises a side wall portion, the side wall portion forms at least part of a peripheral wall of the accommodating cavity, and the side wall portion is provided with at least four communication ports; at least part of the valve core is located in the accommodating cavity and can rotate, and the valve core is provided with a first conduction cavity; and the valve core at least has a first position and a second position, wherein in the first position of the valve core, the first conduction cavity conducts at least two communication ports, and in at least one of the first position and the second position of the valve core, at least one communication port is closed by at least part of a wall portion, which forms the first conduction cavity. In this way, not only can a plurality of flow paths conduct therebetween, but at least one communication port can also be isolated.

## Description

The present application claims the priorities to the following two Chinese Patent Applications, both of which are incorporated herein by reference,
1) Chinese Patent Application No. 202210219030.6, titled "CONTROL VALVE", filed with the China National Intellectual Property Administration on March 8, 2022; and
2) Chinese Patent Application. No. 202210219282.9, titled "CONTROL VALVE", filed with the China National Intellectual Property Administration on March 8, 2022.

### FIELD

The present application relates to the technical field of fluid control, and in particular to a control valve.

### BACKGROUND

In a thermal management system, a control valve is needed for controlling multiple flow paths. Generally, the control valve has a valve core and multiple ports, and communications between the ports are achieved by a rotation of the valve core.

With the development of control valves, people have increased requirements with respect to functions of the control valve. For example, such a control valve having a simple structure is needed, which can not only achieve the communication of a fluid, but also implement the functions where some of the ports are all not in communication with the other ports within the control valve.

### SUMMARY

An object of the present application is to provide a control valve that has a simple structure, and can not only implement a communication between at least two flow paths but also close at least one communication port.

A control valve is provided according to the embodiments of the present application. The control valve is provided with an accommodation chamber, and the control valve includes a valve body and a valve core. The valve body includes a side wall portion, the side wall portion forms at least a part of a peripheral wall of the accommodation chamber, and the side wall portion is provided with at least four communication ports. At least a part of the valve core is located inside the accommodation chamber and is rotatable. The valve core is provided with a first communication chamber.

The valve core has at least a first position and a second position. At the first position of the valve core, the first communication chamber communicates at least two of the communication ports. At at least one of the first position and the second position of the valve core, at least a part of a wall portion that forms the first communication chamber closes at least one of the communication ports.

According to the control valve provided in the embodiments of the present application, the valve core is rotatable inside the accommodation chamber, and the valve core is provided with the first communication chamber. When the valve core is at the first position, the first communication chamber communicates at least two of the communication ports. By the valve core being arranged at at least one of the first position and the second position, at least a part of the wall portion of the first communication chamber closes at least one of the communication ports. As such, when the valve core is at one position or at at least two different positions, a fluid through one of the communication ports is not in communication with a fluid through any other communication ports within the control valve, such that at least the part of the wall portion of the first communication chamber closes the one of the communication ports. Compared with a solution that an additional isolation portion is provided on the valve core to close the communication ports, the control valve according to the embodiments of the present application reuses at least the part of the wall portion of the first communication chamber to close the communication port, and therefore the valve core has a simple structure.

### BRIEF DESCRIPTION OF THE DRAWINGS

FIG. 1 is a schematic exploded view of a control valve according to an embodiment of the present application;
FIG. 2 is a schematic perspective view of the control valve in FIG. 1;
FIG. 3 is a schematic cross-sectional view of the control valve in FIG. 2 at one position;
FIG. 4 is a schematic structural view of a combination of a valve body and a sealing component according to an embodiment of the present application;
FIG. 5 is a schematic cross-sectional view of the control valve in FIG. 2 at another position, which shows a communication of the control valve when the control valve is in a first operation mode;
FIG. 6 is a schematic view showing a communication of the control valve in FIG. 2 when the control valve is in a second operation mode;
FIG. 7 is a schematic view showing a communication of the control valve in FIG. 2 when the control valve is in a third operation mode;
FIG. 8 is a schematic view showing a communication of the control valve in FIG. 2 when the control valve is in a fourth operation mode;
FIG. 9 is a schematic structural view of a valve core according to an embodiment of the present application;
FIG. 10 is a schematic structural view of a control valve according to another embodiment of the present application;
FIG. 11 is a schematic cross-sectional view of the control valve in FIG. 10 at one position;
FIG. 12 is a schematic structural view of a valve core according to another embodiment of the present application;
FIG. 13 is a schematic cross-sectional view of the valve core in FIG. 12;
FIG. 14 is a schematic cross-sectional view of a valve body and a sealing component in FIG. 10;
FIG. 15 is a schematic view showing a communication of the control valve in FIG. 10 when the control valve is in a first operation mode;
FIG. 16 is a schematic view showing a communication of the control valve in FIG. 10 when the control valve is in a second operation mode;
FIG. 17 is a schematic view showing a communication of the control valve in FIG. 10 when the control valve is in a third operation mode; and
FIG. 18 is a schematic view showing a communication of the control valve in FIG. 10 when the control valve is in a fourth operation mode.

### DETAILED DESCRIPTION OF THE EMBODIMENTS

Features in various aspects and exemplary embodiments of the present application are described in detail hereinafter. The present application will be described in detail as follows in conjunction with the accompany drawings and the specific embodiments, so that purposes, technical solutions and advantages of the present application can be more obvious and understandable. The relationship terms "first", "second" and the like herein are merely used for distinguishing one element from another element having a same name, and do not require or imply that there is such actual relationship or sequence among these elements.

A control valve is provided according to the embodiments of the present application. The control valve may be applied to a vehicle thermal management system, and may be specifically applied to a coolant circulation system. The control valve can isolate, communicate or switch flow paths of the thermal management system.

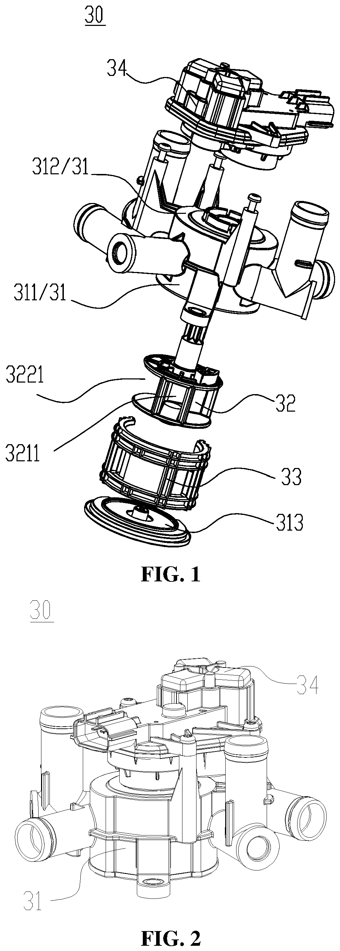

As shown in FIG. 1 to FIG. 4, a control valve 30 according to an embodiment of the present application is provided. The control valve 30 includes a valve body 31, a valve core 32 and a sealing component 33. The valve body 31 has an accommodation chamber and a communication port 301, and at least four communication ports 301 may be provided. The valve body 31 includes a side wall portion 311, a top wall portion 312 and a bottom cover portion 313. Along an axial direction of the side wall portion 311, at least a part of the side wall portion 311 is located between the bottom cover portion 313 and the top wall portion 312. The side wall portion 311, the top wall portion 312 and the bottom cover portion 313 define at least a part of the accommodation chamber. The communication ports 301 are located on an inner surface of the side wall portion 311, and the inner surface of the side wall portion 311 is arranged to face the accommodation chamber. Both the top wall portion 312 and the bottom cover portion 313 are sealedly connected to the side wall portion 311. At least a part of the valve core 32 is located inside the accommodation chamber, and the valve core 32 can be driven to rotate. Along a radial direction of the side wall portion 311, at least a part of the sealing component 33 is located between the side wall portion 311 and the valve core 32 to seal the control valve 30. The sealing component 33 has ducts, and the ducts are arranged in correspondence to the communication ports 301 and in communication with the communication ports 301, such that the corresponding communication ports 301 are communicated. Optionally, the control valve 30 further includes a driving assembly 34, and the driving assembly 34 includes a driving member. The driving member may include a motor or a combination of a motor and a transmission gear set. The driving member is connected to the valve core 32 in a transmission manner, such that the driving member drives the valve core 32 to rotate. Communications between different communication ports 301 are achieved by a rotation of the valve core.

In other embodiments, the control valve 30 further includes connection pipes 314, and each of the connection pipes 314 is provided with a flow passage. One end of the flow passages is in communication with the corresponding communication port 301, and the other end of the flow passage forms a port of the control valve 30. The ports may be integrated on one single plane or be arranged according to the use requirements. Alternatively, the connection pipes 314 may be connected to other fluid assemblies in the thermal management system. For example, the fluid assemblies may be heat exchangers, water pumps or other structures.

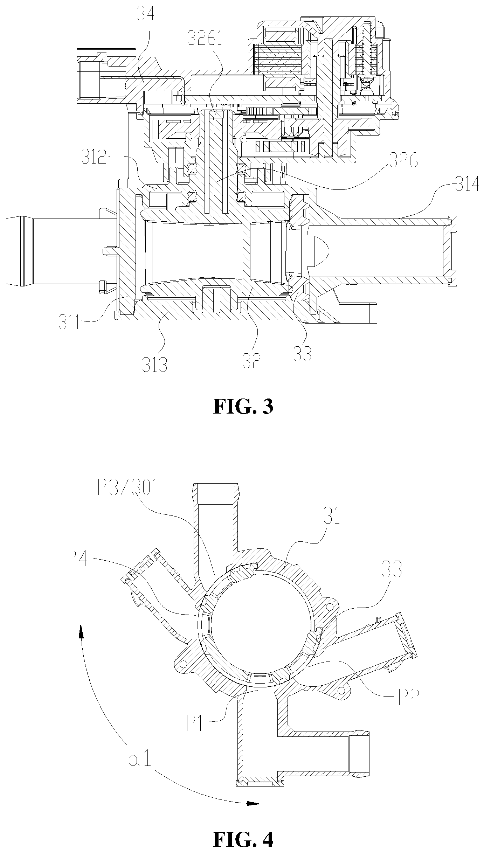

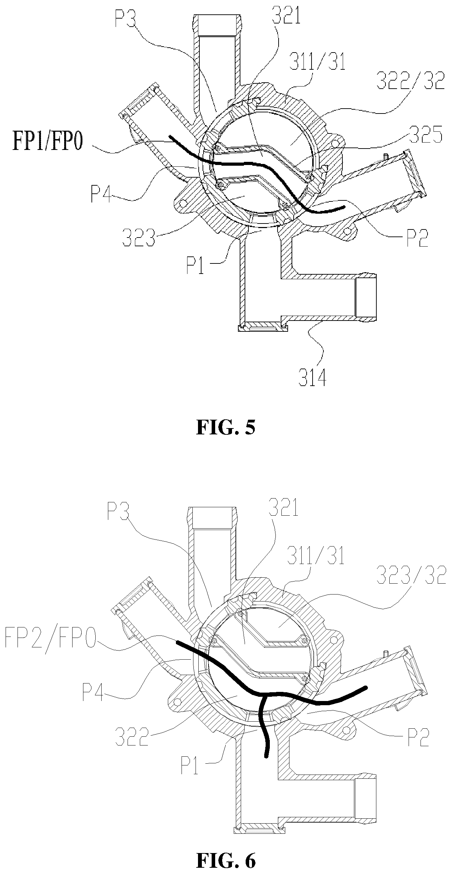

As shown in FIG. 4 to FIG. 9, in an embodiment of the present application, at least some of the communication ports 301 are arranged along a circumferential direction of the side wall portion 311. In an actual use, all of the communication ports 301 are arranged along the circumferential direction of the side wall portion 311. Along a circumferential direction of the valve core 32, the valve core 32 is provided with communication chambers, the number of which is M. In at least one operation mode of the control valve 30, the control valve 30 is provided with flow paths, the number of which is N. Each of the flow paths refers to a fluid flow path formed between at least two of the communication ports 301 through a same one of the communication chambers of the valve core 32. For example, as shown in FIG. 5, one fluid flow path is formed between a second port P2 and a fourth port P4 through one communication chamber of the valve core 32. Herein, M≥2. In at least one operation mode of the control valve 30, M>N, where both M and N are positive integers, and the total number of the communication ports 301 in N flow paths is less than the total number of the communication ports 301 on the side wall portion 311.

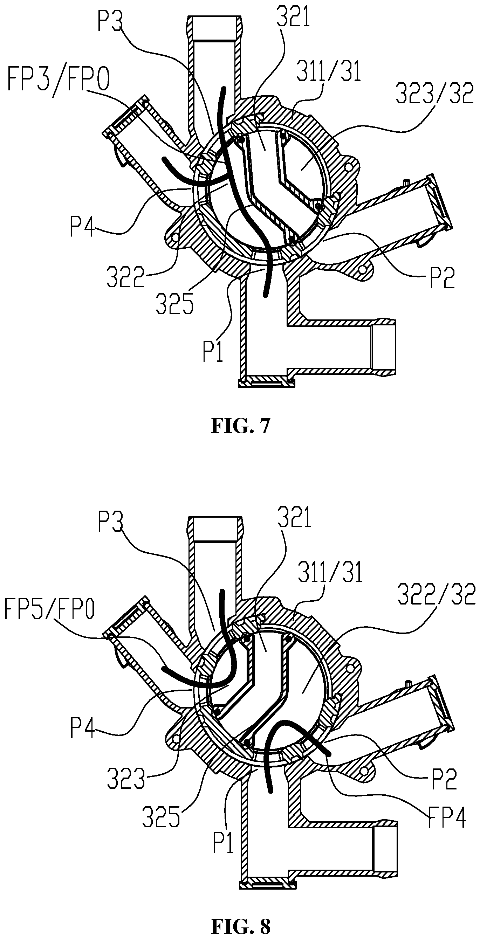

In some embodiments, in at least one operation mode of the control valve 30, N=1, and two or three of the communication ports 301 form one flow path. For example, when one flow path includes three communication ports 301, and the number of the communication ports 301 provided on the side wall portion 311 is four, such that one of the four communication ports 301 is isolated. In at least one of the other operation modes of the control valve 30, N=2, and the four communication ports 301 are communicated in pairwise correspondence, respectively. In the specific embodiment, when the control valve 30 is in different operation modes, N that refers to the number of the formed flow paths may be different. For example, when the control valve 30 is in operation modes shown in FIG. 5 to FIG. 7, N=1, and thus the control valve 30 has one flow path. When the control valve 30 is in an operation mode shown in FIG. 8, N=2, and thus the control valve 30 has two flow paths.

In an embodiment, a main body of the valve core 32 is of a cylinder structure, and the valve core 32 is of a one-piece structure made by injection molding. The valve core 32 is provided with a first communication chamber 321. The valve core 32 includes a first partition 325, which forms at least a part of a wall portion of the first communication chamber 321. As shown in FIG. 4 and FIG. 5, at a first position of the valve core 32, the first communication chamber 321 communicates at least two communication ports 301. As shown in FIG. 4 to FIG. 7, at at least one of the first position and a second position of the valve core 32, the first partition 325 isolates at least one communication ports 301. In the context, the isolation refers to a situation that, the isolated communication port is not in communication with any other communication ports within the control valve 30, such that the isolated communication port is in a closed state. With the above arrangement, the first partition 325 isolates at least one communication ports 301, such that a fluid through this at least one communication ports 301 is not in communication with fluids through any other of the communication ports 301 within the control valve 30. As such, the control valve 30 implements a function of closing the at least one of the communication ports 301 through the first partition 325. In the context, "closing the communication port" refers to that the closed communication port is not in communication with any other communication ports within the control valve 30.

Further, referring to FIG. 1, and FIG. 4 to FIG. 9, in some embodiments, the valve core 32 includes two first partitions 325, and the two first partitions 325 form two side walls of the first communication chamber 321. The first communication chamber 321 has two first openings 3211 at a peripheral side of the valve core 32. At the first position of the valve core 32, one first opening 3211 is in correspondence to and in communication with at least one of the communication ports 301, and the other first openings 3211 is in correspondence to and in communication with at least one of the rest communication ports 301. As shown in FIG. 6 and FIG. 7, at the second position of the valve core 32, one of the two first openings 3211 of the first communication chamber 321 is in correspondence to and in communication with one of the communication ports 301, and the other one of the two first openings 3211 is arranged staggeredly with any of the communication ports 301. In this case, the communication port 301 in correspondence to the first communication chamber 321 is isolated by the first partitions 325, and is not in communication with any other communication ports within the control valve 30. In combination with the sealing function of the sealing component, closing said communication port is achieved. With the above arrangement, by one first communication chamber 321, not only communicating the flow path but also isolating at least one of the communication ports can be achieved. Therefore, the control valve 30 in the embodiments of the present application has a simple structure.

Further, referring to FIG. 4 to FIG. 9, in some embodiments, the valve core 32 further includes a second communication chamber 322. One first partition 325 is located between the first communication chamber 321 and the second communication chamber 322. The first opening 3211 of the first communication chamber 321 at the peripheral side of the valve core 32 is smaller than a second opening 3221 of the second communication chamber 322 at the peripheral side of the valve core 32. An area of the second opening 3221 is greater than or equal to three times an area of the communication port 301, such that the second communication chamber 322 can communicate at least three communication ports 301. Optionally, an area of the first opening 3211 is greater than or equal to the area of the communication ports 301, and is smaller than two times the area of the communication ports 301, that is, the first opening is unable to make any two of the communication ports 301 be in a full communication state at the same time, where the full communication state of the communication port 301 refers to a state that the openings of the communication chamber of the valve core 32 is overlapped with the entire area of the communication port.

In some embodiments, the communication ports 301 include a first port P1, a second port P2, a third port P3, and a fourth port P4 that are arranged along the circumferential direction of the side wall portion 311. The first port P1, the second port P2, the third port P3 and the fourth port P4 may be arranged along the circumferential direction of the side wall portion 311 in sequence. In the specific embodiment, the valve core 32 has one first position and two second positions. The two second positions are defined as a second sub-position and a third sub-position, respectively. Corresponding to the first position, the second sub-position and the third sub-position, the first communication chamber 321 is at different positions inside the accommodation chamber, respectively. The valve core 32 can be switched among the above positions by its rotation. Communication states of each communication port corresponding to the different positions of the valve core 32 are described hereinafter.

As shown in FIG. 5, the valve core 32 is at the first position, and the control valve 30 is in a first operation mode. The control valve 30 is provided with one flow path FP0, which is a first flow path FP1. Specifically, the first communication chamber 321 communicates the second port P2 and the fourth port P4. That is, the first flow path FP1 includes the second port P2, the first communication chamber 321 of the valve core 32 and the fourth port P4. The first partitions 325 isolate both the first port P1 and the third port P3. In this case, both the first port P1 and the third port P3 are in a closed state.

As shown in FIG. 6, the valve core 32 is at the second sub-position, and the control valve 30 is in a second operation mode. The control valve 30 is provided with one flow path FP0, which is a second flow path FP2. Specifically, the second communication chamber 322 of the valve core communicates the first port P1, the second port P2 and the fourth port P4. That is, the second flow path FP2 includes the first port P1, the second communication chamber 321 of the valve core 32, the second port P2, and the fourth port P4. The first partitions 325 isolate the third port P3. In this case, the third port P3 is in the closed state.

As shown in FIG. 7, at the third sub-position, the control valve 30 is in a third operation mode. The control valve 30 is provided with one flow path FP0, which is a third flow path FP3. Specifically, the second communication chamber 322 of the valve core 32 communicates the first port P1, the third port P3 and the fourth port P4. That is, the third flow path FP3 includes the first port P1, the second communication chamber 322 of the valve core 32, the third port P3 and the fourth port P4. The first partitions 325 isolate the second port P2. In this case, the second port P2 is in the closed state.

In some embodiments, the valve core 32 further includes a third communication chamber 323. One first partition 325 is located between the first communication chamber 321 and the second communication chamber 322, and the other first partition 325 is located between the first communication chamber 321 and the third communication chamber 323. Along a radial direction of the valve core 32, the first communication chamber 321 is located between the second communication chamber 322 and the third communication chamber 323. In this case, the valve core 32 further has a fourth position. When the valve core 32 is at the fourth position, the control valve 30 is in a fourth operation mode. The third communication chamber 323 communicates the third port P3 and the fourth port P4. An area of a third opening of the third communication chamber 323 at the peripheral side of the valve core 32 is greater than or equal to two times the area of each of the communication ports, and is less than or equal to three times the area of each of the communication ports 301. That is, the third communication chamber 323 can communicate two communication ports 301 at the same time, but cannot make three communication ports 301 to be in the full communication state at the same time.

Based on this, as shown in FIG. 8, the valve core 32 further has the fourth position, and the control valve 30 is in the fourth operation mode. The control valve 30 is provided with two flow paths FP0, which are a fourth flow path FP4 and a fifth flow path FP5. The second communication chamber 322 of the valve core 32 communicates the first port P1 and the second port P2, and the third communication chamber 323 of the valve core 32 communicates the third port P3 and the fourth port P4. In this case, the fourth flow path FP4 includes the first port P1, the second communication chamber 322 of the valve core and the second port P2, and the fifth flow path FP5 includes the third port P3, the third communication chamber 323 of the valve core 32 and the fourth port P4.

With the above structure of the control valve 30 and the operation modes, various communication paths of the control valve 30 can be achieved, and isolations of various ports can be achieved. When the control valve 30 is applied to the thermal management system, requirements for various operation modes of the thermal management system are satisfied.

Referring to FIG. 4 to FIG. 9, in this embodiment, the valve core 32 has three communication chambers along the circumferential direction of the valve core 32, i.e. M=3. In any one of the four operation modes described above, N≤2.

Further, as shown in FIG. 4, in some embodiments, the third port P3 and the fourth port P4 are arranged adjacent to each other, and the first port P1 and the second port P2 are arranged adjacent to each other. An angle a1 between a center line of the first port P1 and a center line of the fourth port P4 is greater than or equal to 90 degrees. An angle between each of the two pairs of communication ports 301 adjacent to each other is less than or equal to 45 degrees, and an angle between a center line of the third port P3 and the center line of the fourth port P4 is less than or equal to 45 degrees. Correspondingly, an angle between the center line of the first port P1 and a center line of the second port P2 is less than or equal to 45 degrees.

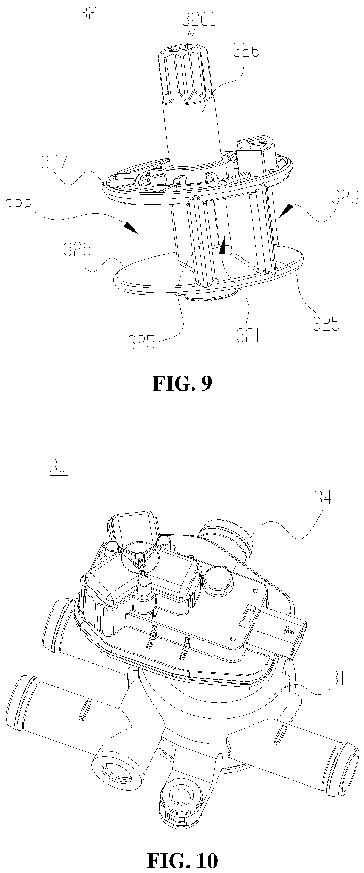

As shown in FIG. 10 to FIG. 13, which show schematic structural views of a control valve according to another embodiment of the present application, the control valve according to this embodiment of the present application has the same operation modes and a similar structure as the control valve shown in FIG. 1 to FIG. 9. That is, in this embodiment, N≤2. A valve core 32 of the control valve 30 shown in FIG. 10 to FIG. 13 includes a first communication chamber 321 and a second communication chamber 322. In this case, the control valve 30 has two communication chambers, and M=2. Along a radial direction of the valve core 32, the first communication chamber 321 is closer to a central axis of the valve core 32 than the second communication chamber 322. The first communication chamber 321 is provided with two first openings 3211 on a circumferential surface of the valve core 32, and the second communication chamber 322 is provided with one second opening 3221 at a peripheral side of the valve core 32. An area of the second opening 3221 is greater than or equal to three times the area of each of the communication ports 301. That is, three communication ports 301 can be communicated at the same time. The difference between the control valve according to this embodiment and the control valve shown in FIG. 1 to FIG. 9 lies in the structures of the valve core and the valve body. The structure of the control valve 30 according to this embodiment of the present application is described as follows in conjunction with FIG. 10 to FIG. 13.

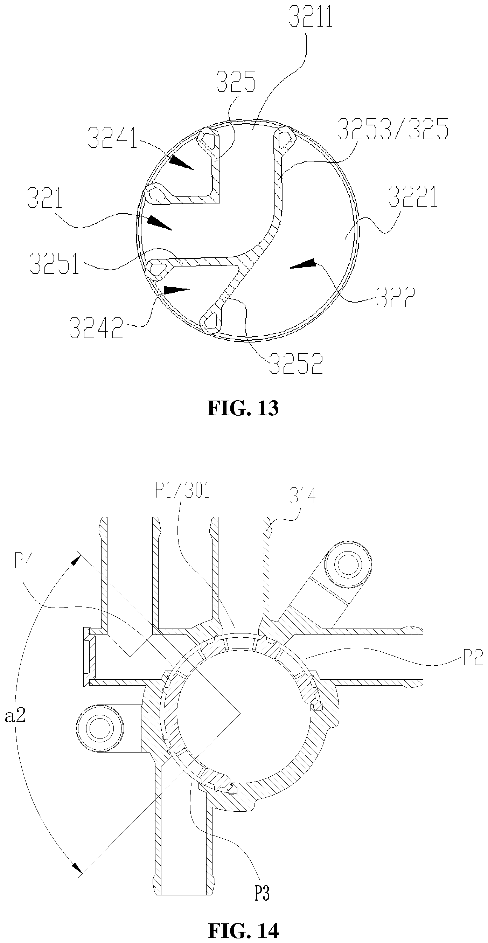

In some embodiments, one of the two first partitions 325 of the first communication chamber 321 forms the first isolation chamber 3241. As shown in FIG. 13 to FIG. 15, two side edges of each first partition 325 extending along an axial direction abuts against the sealing component 33. In this way, the first partition 325 and the sealing component 33 can enclose to form an isolation space to close one of the communication ports 301. The first partition 325 in FIG. 13 is roughly L-shaped. Along the radial direction of the valve core 32, the first communication chamber 321 is located between the first isolation chamber 3241 and the second communication chamber 322. An area of an opening of the first isolation chamber 3241 at the outer peripheral side of the valve core is greater than or equal to the area of each of the communication ports, and is less than or equal to two times the area of each of the communication ports. The other one of the two first partitions 325 of the first communication chamber 321 includes a first sub-portion 3251, a second sub-portion 3252 and a third sub-portion 3253. An extension direction of the first sub-portion 3251 intersects with an extension direction of the second sub-portion 3252, and both the first sub-portion 3251 and the second sub-portion 3252 intersect with the third sub-portion 3253, such that the other one of the two first partitions 325 is Y-shaped on a section perpendicular to the axial direction of the valve core 32.

To achieve an isolation of ports in multiple operation modes of the control valve 30, in some embodiments, the first sub-portion 3251 of the first partitions 325 forms a part of a wall portion of the first communication chamber 321. The first sub-portion 3251 and the third sub-portion 3253 form one of side walls of the first communication chamber 321, and a second isolation chamber 3242 is formed between the second sub-portion 3252 and the first sub-portion 3251. That is, the second sub-portion 3252, the first sub-portion 3251 and the sealing component 33 enclose to form an isolation space. An area of an opening of the second isolation chamber 3242 at the outer peripheral side of the valve core 32 is greater than or equal to the area of each of the communication ports 301, and is less than or equal to two times the area of each of the communication ports. That is, the second isolation chamber 3242 is unable to make any two of the communication ports 301 in the full communication state at the same time.

At a first position and at least one second position, one of the first isolation chamber 3241 and the second isolation chamber 3242 is arranged in correspondence to one of the communication ports 301, and isolates this communication port 301. With the above arrangement, the first partition 325 in correspondence to each isolation chamber can isolate one of the communication ports 301 of the control valve 30.

As shown in FIG. 14, in some embodiments, the fourth port P4, the first port P1 and the second port P2 are arranged adjacent to each other. An angle between a center line of the fourth port P4 and a center line of the first port P1 is less than or equal to 45 degrees. An angle between the center line of the first port P1 and a center line of the second port P2 is less than or equal to 45 degrees, and an angle between a center line of the third port P3 and the center line of the fourth port P4 is greater than or equal to 90 degrees.

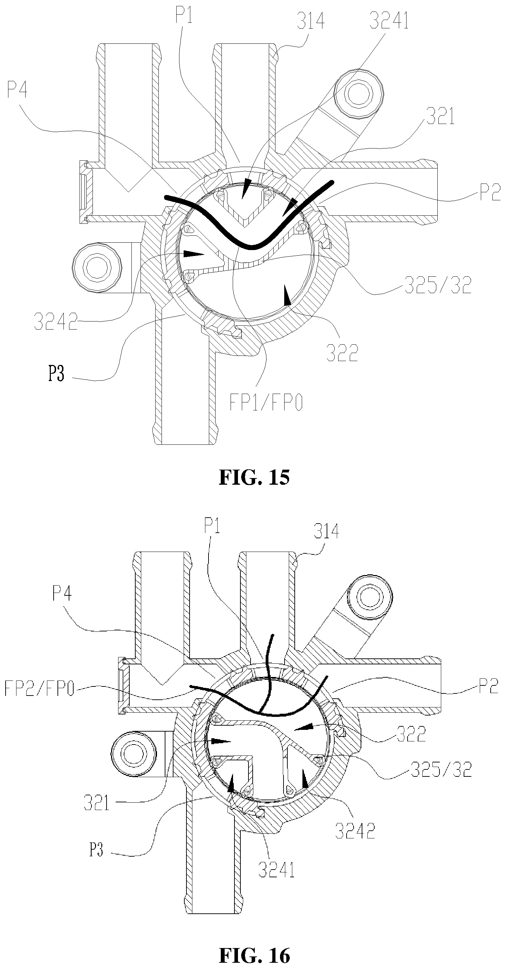

In the specific embodiment, as shown in FIG. 15, the valve core 32 is at a first position, and the control valve 30 is in a first operation mode. In this case, the first isolation chamber 3241 is in correspondence to and in communication with the first port P1, and can isolate the first port P1 to close the first port P1. The other one of the two first partitions 325 isolates the third port P3 while the second port P2 and the fourth port P4 are in communication through the first communication chamber 321. At this time, a first flow path FP1 of the control valve 30 includes the second port P2, the first communication chamber 321 and the fourth port P4.

As shown in FIG. 16, the valve core 32 is at a second sub-position, and the control valve 30 is in a second operation mode. In this case, the first isolation chamber 3241 is in correspondence to and in communication with the third port P3, and can isolate the third port P3 to close the third port P3. The second port P2, the first port P1 and the fourth port P4 are in communication through the second communication chamber 322. At this time, a second flow path FP2 includes the second port P2, the second communication chamber 322, the first port P1 and the fourth port P4.

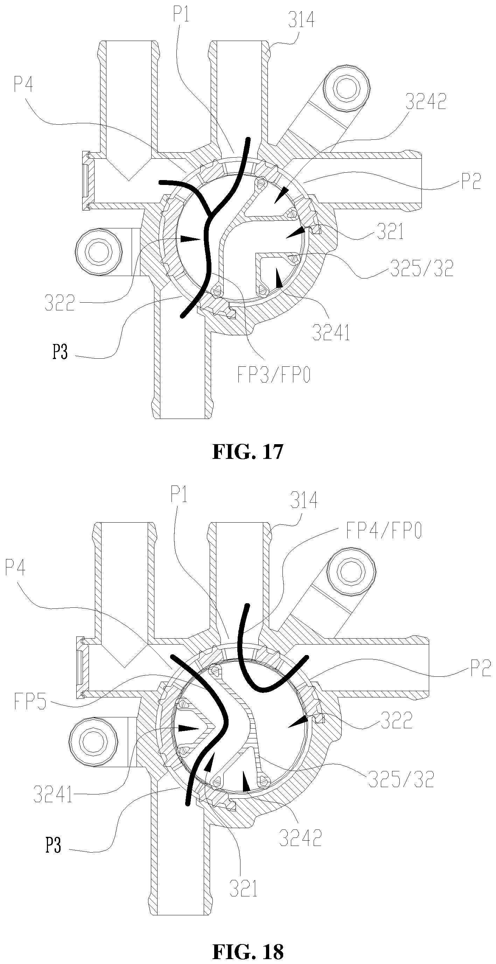

As shown in FIG. 17, the valve core 32 is at a third sub-position, and the control valve 30 is in a third operation mode. In this case, the second isolation chamber 3242 is in correspondence to and in communication with the second port P2, and can isolate the second port P2 to close the second port P2. The first port P1, the fourth port P4 and the third port P3 are in communication through the second communication chamber 322. At this time, a third flow path FP3 includes the first port P1, the second communication chamber 322, the third port P3 and the fourth port P4.

As shown in FIG. 18, the valve core 32 is at a fourth position, and the control valve 30 is in a fourth operation mode. In this case, the fourth port P4 and the third port P3 are in communication through the first communication chamber 321, and the first port P1 and the second port P2 are in communication through the second communication chamber 322. At this time, a fourth flow path FP4 includes the first port P1, the second communication chamber 322 and the second port P2, and a fifth flow path FP5 includes the third port P3, the first communication chamber 321 and the fourth port P4.

In an embodiment, the valve core 32 can rotate by 90 degrees from the third sub-position to the second sub-position, rotate by 45 degrees from the second sub-position to the fourth position, and rotate by 90 degrees from the fourth position to the first position. The user may configure the positions and the structures of both the valve core 32 and the communication ports according to demands, such that the valve core 32 is rotated by an angle to the corresponding position in order to realize the corresponding operation mode of the control valve 30. It may be appreciated that, based on the structure described herein, other operation modes may be achieved by further rotation of the valve core 32, which are not described herein.

In some embodiments, along a height direction of the control valve 30, a height of the control valve 30 is less than or equal to 150 mm. Along a width direction of the control valve 30, a width of the control valve 30 is less than or equal to 100 mm, where the width direction is perpendicular to the height direction. Along a length direction of the control valve 30, a length of the control valve 30 is less than or equal to 150 mm, where the length direction is perpendicular to both the height direction and the width direction. With the above arrangement, the control valve 30 has a reasonable size, thereby achieving a miniaturization. The height direction of the control valve 30 herein is parallel to or coincides with the axial direction of the valve core 32.

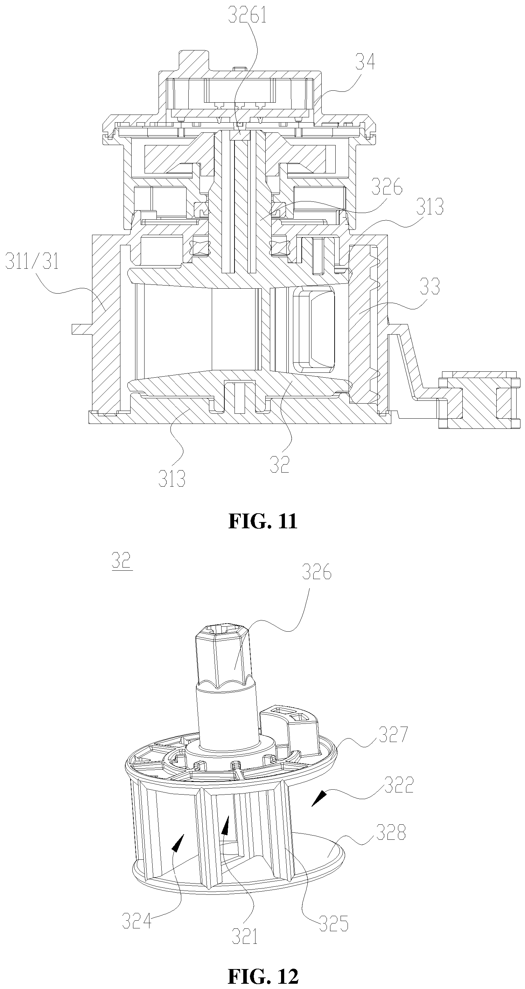

As shown in FIG. 3 and FIG. 11, in order to detect a rotation position of the valve core 32 and detect if the valve core 32 is stuck, the valve core 30 further includes a detection assembly. The detection assembly includes an element 3261 to be detected and a detector (not shown in the drawings). The element 3261 to be detected can be rotated in sync with the valve core 32. In an embodiment, the valve core 32 includes a valve core shaft 326, and the element 3261 to be detected is located at an end of the valve core shaft 326 and is fixedly connected to the valve core shaft 326. The element 3261 to be detected may be a magnetic element. Correspondingly, the detector may be a hall element. During the rotation of the valve core 32, the hall element is always within a magnetic field of the magnetic element, so as to facilitate the cooperation of the hall element and the magnetic element with each other to detect the position of the valve core 32. The element 3261 to be detected is fixedly connected to the valve core 32, and thus the position of the valve core 32 can be detected more precisely. It should be noted that, the fixed connection herein may be but not limited to welding, bonding, a thread connection, a connection by a fastener, forming integrally into a one-piece structure, hot riveting and so on.

In summary, according to the control valve 30 provided in the embodiments of the present application, the valve core 32 is rotatable inside the accommodation chamber. The valve core 32 has the first communication chamber 321, and the valve core 32 includes the first partitions 325, a first end plate 327 and a second end plate 328. The first end plate 327 and the second end plate 328 are spaced apart along the axial direction of the valve core 32. At least a part of each first partition 325 is located between the first end plate 327 and the second end plate 328. When the valve core 32 is at the first position, the first communication chamber 325 communicates at least two of the communication ports 301, such that a flow path is communicated through the valve core 32. Further, when the valve core 32 is at at least one of the first position and the second positions, the first partitions 325 isolate at least one of the communication ports 301, such that a fluid through the at least one of the communication ports 301 is not in communication with fluids through any other communication ports within the control valve 30, thereby closing the at least one of the communication ports 301 by the first partitions 325. The valve core 32 has M communication chambers along the circumferential direction of the valve core 32, and each of the communication chambers can be configured to communicate at least two of the communication ports 301. In this way, when the control valve 30 is in any operation mode, N flow paths are formed in the control valve 30, such that the control valve 30 implements a communication function of various flow paths. Further, when the control valve 30 is in at least one of the operation modes, M>N. Compared with a case that each of the communication ports can be communicated by a configuration of M=N, in the present application, M that represents the number of the communication chambers is greater than N that represents the number of the formed flow paths in at least one of the operation modes. As such, some of the communication ports 301 cannot be communicated through the communication chambers, such that the fluids through these communication ports 301 are not in communication with the fluids through any other communication ports 301 within the control valve 30, thereby achieving the close of these communication ports. Compared with a solution that an additional isolation portion is provides on the valve core to close the communication ports, the control valve 30 according to the embodiments of the present application reuses at least a part of the wall portion of the first communication chamber 321 to close the communication ports 301, such that the control valve 30 has a simple structure, which can be widely used.

It should be noted that, the above embodiments are only intended to describe the present application rather than limit the technical solutions of the present application, for example, those directional definitions such as "front", "rear", "left", "right", "upper", "lower" or the like. Although the present application is described in detail herein with reference to the above embodiments, it should be understood by those skilled in the art, that modifications, combinations and equivalent substitutions may be made to the present application by those skilled in the art. Any technical solutions and modifications thereof without departing from the concept and the scope of the present application are regarded as falling into the scope of the present application.

## Claims

1. A control valve, wherein
the control valve is provided with an accommodation chamber, and the control valve comprises a valve body and a valve core,
the valve body comprises a side wall portion, the side wall portion forms at least a part of a peripheral wall of the accommodation chamber and is provided with at least four communication ports, wherein at least a part of the valve core is located inside the accommodation chamber and is rotatable, and the valve core is provided with a first communication chamber,
the valve core has at least a first position and a second position, wherein, when the valve core is at the first position, the first communication chamber is configured to communicate at least two of the communication ports, and when the valve core is at at least one of the first position and the second position, at least a part of a wall portion that forms the first communication chamber closes at least one of the communication ports.

2. The control valve according to claim 1, wherein
the valve core comprises two first partitions, and the two first partitions form two side walls of the first communication chamber,
the first communication chamber is provided with two first openings at a peripheral side of the valve core,
when the valve core is at the first position, one of the two first openings is in communication with at least one of the communication ports, and the other one of the two first openings is in communication with at least another one of the communication ports, and
when the valve core is at the second position of the valve core, one of the two first openings is in communication with one of the communication ports, and the other one of the two first openings is arranged staggeredly from any others of the communication ports.

3. The control valve according to claim 1, wherein
at least a part of the communication ports are arranged along a circumferential direction of the side wall portion,
the valve core is provided with M communication chambers, and each of the communication chambers is configured to communicate at least two of the communication ports,
in at least some of operation modes of the control valve, the control valve has N flow paths, and each of the flow paths comprises the communication chamber and at least two communication ports in communication with the communication chamber, wherein M≥2, and both M and N are positive integers,
in at least one of the operation modes of the control valve, M>N, and a total number of the communication ports of the N flow paths is less than a total number of all of the communication ports on the side wall portion.

4. The control valve according to claim 3, wherein
in at least one of the operation modes of the control valve, N=1, and two or three of the communication ports form one flow path, and
in at least another one of the operation modes of the control valve, N=2, and four of the communication ports are communicated in pairwise correspondence.

5. The control valve according to any one of claims 1 to 4, wherein
the valve core comprises first partitions, and at least a part of the wall portion of the first communication chamber is formed by the first partitions,
the valve core has one first position and two second positions, wherein the two second positions comprises a second sub-position and a third sub-position,
the communication ports comprises a first port, a second port, a third port and a fourth port that are arranged along a circumferential direction of the side wall portion,
at the first position, the control valve is in a first operation mode, the first partitions close the first port and the third port, and the first communication chamber is configured to communicate the second port and the fourth port,
at the second sub-position, the control valve is in a second operation mode, the first partitions close the third port, and
at the third sub-position, the control valve is in a third operation mode, and the first partitions close the second port.

6. The control valve according to claim 5, wherein
the valve core further comprises a second communication chamber,
one of the first partitions is located between the first communication chamber and the second communication chamber, and
a first opening of the first communication chamber at a peripheral side of the valve core is smaller than a second opening of the second communication chamber at the peripheral side of the valve core, and an area of the second opening is greater than or equal to three times an area of each of the communication ports.

7. The control valve according to claim 6, wherein
at the second sub-position, the second communication chamber is configured to communicate the second port, the first port and the fourth port, and
at the third sub-position, the control valve is in the third operation mode, and the second communication chamber is configured to communicate the first port, the fourth port and the third port.

8. The control valve according to claim 7, wherein
the valve core further has a fourth position,
at the fourth position, the control valve is in a fourth operation mode, the second communication chamber is configured to communicate the second port and the first port, and the valve core is configured to communicate the third port and the fourth port.

9. The control valve according to claim 8, wherein
the valve core further comprises a third communication chamber,
the first communication chamber is located between the second communication chamber and the third communication chamber along a radial direction of the valve core, and
at the fourth position, the third communication chamber is configured to communicate the third port and the fourth port.

10. The control valve according to claim 9, wherein
the third port and the fourth port are arranged adjacent to each other, and the first port and the second port are arranged adjacent to each other,
an angle between a center line of the first port and a center line of the fourth port is greater than or equal to 90 degrees, and
an angle between the two ports that are arranged adjacent to each other is less than or equal to 45 degrees.

11. The control valve according to claim 8, wherein
one of the first partitions of the first communication chamber forms a first isolation chamber,
the first communication chamber is located between the first isolation chamber and the second communication chamber along a radial direction of the valve core,
the other one of the first partitions of the first communication chamber comprises a first sub-portion and a second sub-portion, and an extension direction of the first sub-portion intersects with an extension direction of the second sub-portion,
the first sub-portion forms a part of the wall portion of the first communication chamber, the second sub-portion is spaced apart from the first sub-portion, and a second isolation chamber is formed between the second sub-portion and the first sub-portion,
the first communication chamber is located between the first isolation chamber and the second isolation chamber along a circumferential direction of the valve core, and
at both the first position and at least one of the second positions, at least one of the first isolation chamber and the second isolation chamber is in correspondence to and close one of the communication ports.

12. The control valve according to claim 11, wherein
at the second sub-position, the first isolation chamber is in correspondence to the third port and closes the third port,
at the third sub-position, the second isolation chamber is in correspondence to the second port and isolate the second port, and
at the fourth position, the first communication chamber is configured to communicate the third port and the fourth port.

13. The control valve according to claim 11, wherein
the fourth port, the first port and the second port are arranged adjacent to each other,
an angle between a center line of the third port and a center line of the fourth port is greater than or equal to 90 degrees, and
an angle between any two of the communication ports that are arranged adjacent to each other is less than or equal to 45 degrees.

14. The control valve according to claim 11, wherein
along a height direction of the control valve, a height of the control valve is less than or equal to 150 mm,
along a width direction of the control valve, a width of the control valve is less than or equal to 100 mm, wherein the width direction is perpendicular to the height direction, and
along a length direction of the control valve, a length of the control valve is less than or equal to 150 mm, wherein the length direction is perpendicular to both the height direction and the width direction.

15. The control valve according to any one of claims 1 to 4, wherein
a main body of the valve core is of a cylinder structure, the valve core is of a one-piece structure made by injection molding, and the valve core comprises a valve core shaft, and
the control valve comprises a component to be detected and a detector, the component to be detected is located at an end of the valve core shaft and is fixedly connected to the valve core shaft, and the detector is configured to cooperate with the element to be detected to detect a position of the valve core.
